# EUROPÄISCHE PATENTSCHRIFT

(11) **EP 1 967 105 B1**
(45) Veröffentlichungstag und Bekanntmachung des Hinweises auf die Patenterteilung: **30.06.2010**
(21) Anmeldenummer: 08002411.0
(22) Anmeldetag: 09.02.2008
(51) Int. Cl.: A47J 43/06, A47J 43/08

(54) **Küchengerät für den häuslichen Bedarf**
Cooking device for home use
Appareil de cuisson pour les besoins ménagers

(30) Priorität: 09.03.2007 DE 102007011517
(43) Veröffentlichungstag der Anmeldung: 10.09.2008
(73) Patentinhaber: Braun GmbH, 61476 Kronberg (DE)
(72) Erfinder: Hernández, Alejandro, 43700 El Vendrell (Tarragona) (ES); Penaranda, Maiano, 08005 Barcelona (ES); Ràfols, Robert, 08100 Sant Fost de Campcentelles (Barcelona) (ES); Gili, Sergi, 08820 El Prat de Llobregat (Barcelona) (ES)

(56) Entgegenhaltungen:
- EP-B1- 1 039 825
- GB-A- 1 404 063

## Beschreibung

Die Erfindung betrifft ein Küchengerät für den häuslichen Bedarf gemäß dem Oberbegriff des Patentanspruches 1.

Sowohl aus der DE-1 846 736 U wie aus der DE-33 07 023 A1 sind Küchengeräte für den häuslichen Bedarf, hier Stabmixer, bekannt, die an ihrer Abtriebsseite mindestens zwei mit unterschiedlicher Drehzahl rotierende und mit unterschiedlich ausgeformten Kupplungseinrichtungen versehene Ausgangswellen aufweisen. Auf diese Weise können verschiedene Arbeitswerkzeuge in die sich unterscheidenden Kupplungsvorrichtungen eingesetzt werden, so daß immer nur der an eine Kupplungsvorrichtung angepaßte Eingriff am Arbeitswerkzeug in die dazugehörige Kupplungsvorrichtung der entsprechenden Ausgangswelle einsteckbar ist, während die andere Kupplungsvorrichtung für ein anderes Arbeitswerkzeug mit einem anderen Eingriff vorgesehen ist. Durch diese Anordnung ist es möglich, mit einer einzigen Antriebseinrichtung verschiedene Arbeitswerkzeuge mit unterschiedlichen Drehgeschwindigkeiten anzutreiben. So muß beispielsweise ein Knethaken mit einer geringeren Drehgeschwindigkeit wie ein Schneebesen oder das Messer eines Stabmixervorsatzes angetrieben werden.

Aus der EP-1 039 825 B1 ist schließlich eine Küchengerät der eingangs beschriebenen Art bekannt. Zwischen der Eingangs- und der Ausgangswelle ist eine Getriebeeinrichtung ausgebildet, die mit zwei Getriebestufen betrieben werden kann. Zur Verstellung der Getriebestufe muß eine Bedienungsperson eine am Gehäuse ausgebildete Verschiebeeinrichtung betätigen. Eine Bedienungsperson muß also immer entscheiden, welche Drehzahl der Getriebeeinrichtung sie zum Antrieb welcher Arbeitswerkzeuge benötigt. Dies kann leicht zu einer Fehlbedienung führen, so daß die Nahrungsmittel nicht optimal bearbeitet werden.

Aufgabe der Erfindung ist es nun, eine Küchengerät derart weiterzubilden, daß ohne das Zutun einer Bedienungsperson stets die für die entsprechenden Arbeitswerkzeuge richtige Drehzahl von dem Küchengerät selbst eingesetzt wird. Dabei soll die Einrichtung mit äußerst einfachen und kostengünstigen Mitteln durchgeführt werden.

Diese Aufgabe wird erfindungsgemäß durch die kennzeichnenden Merkmale des Patentanspruches 1 gelöst. Dadurch, daß nach der Erfindung gleichzeitig am Arbeitswerkzeug und an der Getriebeeinrichtung Mittel ausgebildet sind, durch die beim Aufstecken eines Arbeitswerkzeuges die für das Arbeitswerkzeug richtige Getriebestufe gewählt wird, hat eine Bedienungsperson nun nichts anderes mehr zu tun, als lediglich die zur Behandlung von bestimmten Nahrungsmitteln vorgesehenen Arbeitswerkzeuge an dem Küchengerät anzukuppeln. Wird die erfindungsgemäße Getriebeeinrichtung beispielsweise bei einem Stabmixer angewendet, so könnte beispielsweise anstelle des hoch drehenden Mixerstabes nun ein mit niederer Drehzahl drehender Knethaken oder Schneebesen eingesetzt werden, durch die dann die niedere Getriebestufe automatisch zugeschaltet wird. Wird beispielsweise ein Handrührer benutzt, so können hier gleichzeitig zwei Arbeitswerkzeuge eingesetzt werden, wovon aber nur eines für eine Getriebeumschaltung verantwortlich sein muß. Die Auslösung kann aber auch durch beide Arbeitswerkzeuge erfolgen, bzw. erst dann ausgelöst werden, wenn beide gleichen Arbeitswerkzeuge ihre richtige Einsteckposition am Handrührer erreicht haben.

Die Mittel zum Verstellen der Getriebeeinrichtung können beispielsweise optische, magnetische, elektrische oder rein mechanische sein. Wichtig ist nur, daß beim Einsetzen eines Arbeitswerkzeuges die für das Arbeitswerkzeug geeignete Getriebestufe eingestellt wird. Werden beispielsweise optische Mittel benutzt, so kann beispielsweise das Maß der Reflexion vom Arbeitswerkzeug zum Sensor in einer Auswerteelektronik ausgewertet werden, die dann an ein elektrisch betätigbares Stellglied ein entsprechendes elektrisches Signal abgibt, durch das dann die richtige Getriebestufe zugeschaltet wird. Werden beispielsweise magnetische oder elektrische Mittel eingesetzt, so werden auch hier diese Impulse an ein elektrisch betätigbares Stellglied weitergegeben, das seinerseits entsprechend dem Einsatz des Arbeitswerkzeuges die hierfür richtige Getriebestufe einstellt.

Gemäß den Merkmalen des Patentanspruches 2 wird als Getriebeeinrichtung ein Planetenradgetriebe eingesetzt, das einerseits besonders hohe Drehzahlen und hohe Drehmomente verkraften kann und das andererseits große Übersetzungen ermöglicht. Dieser Ausführungsform wurde die in der EP-1 039 825 B1 beschriebene Getriebeeinrichtung zugrunde gelegt, wobei die Mittel aus mindestens einer am Hohlrad ausgebildeten Anschlagfläche und einer am Arbeitswerkzeug ausgebildeten Kontaktfläche besteht. Dabei weisen unterschiedliche Arbeitswerkzeuge von ihren ortsfesten, als Ringnuten ausgebildete Kupplungsmittel unterschiedlich weit beabstandete Kontaktflächen auf, so daß im einen Fall durch das Aufstecken eines für die erste Getriebestufe vorgesehenen Arbeitswerkzeuges dessen Kontaktfläche keine axiale Verschiebung des Hohlrades, während hingegen im anderen Fall durch das Aufstecken eines für die zweite Getriebestufe vorgesehenen Arbeitswerkzeuges dessen Kontaktfläche über die Anschlagfläche eine axiale Verschiebung des Hohlrades bewirkt. Auf diese Weise wird mit besonders einfachen Mitteln allein durch das Aufstecken der entsprechenden Arbeitswerkzeuge die für diese Arbeitswerkzeuge entsprechende Getriebestufe in der Getriebeeinrichtung ausgewählt. Die Getriebeeinrichtung ist als Planetenradgetriebe ausgebildet, welches aus mindestens einem in einem Planetenradgehäuse drehbar gelagerten Planetenrad, einem mit diesem in Zahneingriff stehenden Sonnenrad und einem mit dem Planetenrad in Zahneingriff stehenden Hohlrad besteht, wobei das Planetenrad einerseits mit der Eingangswelle in Zahneingriff und andererseits über sein Planetenradgehäuse mit der Ausgangswelle in Dreheingriff steht, wobei das Planetenrad und das Hohlrad zur Veränderung der Drehzahl an der Ausgangswelle mindestens zwei Zahnräder unterschiedlichen Durchmessers aufweisen, von denen bei axialer Verschiebung des Hohlrades gegenüber dem Planetenrad das erste Zahnradpaar außer Zahneingriff während das andere Zahnradpaar in Zahneingriff gelangt.

Nach den Merkmalen des Patentanspruches 3 ist das Hohlrad über eine Führungsanordnung im Gehäuse axial verschiebbar, jedoch drehfest gelagert. In der Ausgangsstellung greift also das Hohlrad mit seinem größeren Zahnkranzdurchmesser in die mit dem größeren Zahnraddurchmesser versehenen Planetenräder ein und nach der axialen Verschiebung des Hohlrades durch das Einsetzen eines entsprechenden Arbeitswerkzeuges wird das Hohlrad soweit in axialer Richtung verschoben, daß der mit kleinerem Durchmesser versehene Zahnkranz des Hohlrades in die mit dem ebenfalls kleineren Zahnraddurchmesser versehenen Planetenräder eingreift. Auf diese Weise wird von der ersten in die zweite Getriebestufe geschaltet. Die axiale Verschieberichtung verläuft im wesentlichen parallel zur Mittelachse des Planetenradgetriebes und auch parallel zu den Mittelachsen der Arbeitswerkzeuge.

Damit das Hohlrad im Gehäuse axial verschiebbar, jedoch drehfest gelagert ist, sind die Merkmale des Patentanspruches 4 vorgesehen. Dazu besteht die Führungsanordnung aus am Außenumfang des Hohlrades verteilten Gleitschienen, die von am Gehäuse ausgebildeten Nuten umgriffen sind. Die Führungsanordnung stellt also eine Kulissenführung dar, so daß das Hohlrad konzentrisch zum Planetenradgetriebe geführt wird.

Vorteilhafterweise erstrecken sich die Gleitschienen und die Nuten parallel zu den Achsen der Planetenräder (Anspruch 5) und der Mittelachse des Planetenradgetriebes, damit in der Getriebeeinrichtung keine Querkräfte auftreten und die Drehmomente mit dem besten Wirkungsgrad übertragen werden.

Gemäß den Merkmalen des Patentanspruches 6 ist das Hohlrad durch eine zwischen dem Gehäuse und dem Hohlrad vorgespannte Federanordnung beaufschlagt. Die Federanordnung dient dazu, daß das Hohlrad immer dann eine erste Getriebestufe einnimmt, wenn entweder kein Werkzeug in der Getriebeeinrichtung eingesetzt ist oder wenn dasjenige Werkzeug eingesetzt ist, das zum Einsatz für die erste Getriebestufe geeignet ist. Dabei wird die Federanordnung aus am Umfang gleichmäßig verteilten Druckfedern gebildet, die sich zwischen dem antriebsseitigen Ende am Hohlrad und am Gehäuse bzw. an einem ortsfesten Teil des Küchengerätes abstützen.

Dadurch, daß am Hohlrad zwei Zahnkränze ausgebildet sind, wovon mindestens ein Zahnkranz als Ring in dem Hohlrad über Befestigungsmittel fest verankert ist, während hingegen der andere Zahnkranz ein fester Bestandteil des Hohlrades selbst ist, ergibt sich eine besonders einfache Herstellung des Hohlrades. So kann nämlich beispielsweise zunächst das Hohlrad mit dem integrierten Zahnkranz in einem Spritzwerkzeug ausgeformt werden, während gleichzeitig unabhängig davon der zweite Zahnkranz in einem anderen Werkzeug ausgeformt wird. Anschließend kann der zweite Zahnkranz in das Hohlrad eingesetzt und beispielsweise durch Verkleben, Verschrauben oder sonst irgendeine Befestigungsart im Hohlrad befestigt werden.

Eine vorteilhafte Befestigung des im Hohlrad einzusetzenden Zahnkranzes besteht gemäß den Merkmalen des Patentanspruches 8 darin, daß die Befestigungsmittel einerseits aus am Ring radial hervorstehenden Wandelementen gebildet werden, die in am Hohlrad verlaufenden Schlitzen eingreifen und andererseits aus am Hohlrad ausgebildeten Federhaken bestehen, die den Zahnkranz nach seinem Einsetzen im Hohlrad federnd hintergreifen. Beim Einsetzen des Zahnkranzes greifen dabei die hervorstehenden Wandelemente in die am Hohlrad ausgebildeten Schlitze und in der richtigen axialen Lage schnappen dann die Federhaken an den Endflächen des Zahnkranzes ein, so daß der Zahnkranz orts- und drehfest mit dem Hohlrad verbunden ist. Somit kann dieser Zahnkranz auch die von der Antriebseinrichtung über die die Eingangswelle übertragenen Drehmomente aufnehmen und an das Hohlrad weiterleiten, ohne daß dieser sich selbst zu drehen beginnt bzw. sich dabei axial verschiebt.

Durch die Merkmale des Patentanspruches 9 ergibt sich nun eine Getriebeeinrichtung, an deren Ausgangswelle sich eine weitere Getriebestufe anschließt, an der anstelle von einem nunmehr zwei Arbeitswerkzeuge nebeneinander aufsteckbar sind. Eine derartige Getriebeeinrichtung eignet sich besonders für Handrührer oder für sonstige Küchengeräte, die mit zwei Arbeitswerkzeugen gleichzeitig arbeiten können. Dabei steht die Ausgangswelle mit einem ersten Zahnrad in Zahneingriff, das Teil eines zweiten Zahnrades ist, welches seinerseits in Zahneingriff mit einem dritten Zahnrad steht. Das zweite und dritte Zahnrad sind mit je einem Kupplungsteil ausgebildet, an dem je ein Arbeitswerkzeug aufsteckbar ist. Um hierzu nähere Erläuterungen zu vermeiden, verweisen wir auf den von der Anmelderin seit vielen Jahren vertriebenen Handrührer der M 800 Serie, wo sich an die Getriebeeinrichtung eine weitere Getriebestufe mit einem ersten, zweiten und dritten Zahnrad anschließt und ebenso die Arbeitswerkzeuge in am zweiten und dritten Zahnrad ausgebildeten Kupplungselementen aufgesteckt werden.

Die nachgeschaltete Getriebestufe ermöglicht zum anderen, daß die Mittelachsen des zweiten und dritten Zahnrades so zueinander angeordnet sind, daß sie mit den am Hohlrad ausgebildeten Anschlagflächen, die an radial nach innen herein ragenden Armen ausgebildet sind, fluchten und somit mit den an den Arbeitswerkzeugen ausgebildeten Kontaktflächen in Kontakt bringbar sind. Durch die zweiseitige Kraftbeaufschlagung der Arbeitswerkzeuge auf die beiden gegenüberliegenden Anschlagflächen des Hohlrades werden beim Verschieben Verkantungen in der Führungsanordnung am Hohlrad vermieden, wodurch ein besonders leichtes Schalten ohne nennenswerten Kraftaufwand möglich ist.

Um eine besonders verkantungsfreie Verschiebung des Hohlrades durch die Arbeitswerkzeuge zu ermöglichen, sind die Merkmale des Patentanspruches 10 vorgesehen. Mit dieser Ausführung reichen am Hohlrad ausgebildete Kragarme bis in die Höhe der Arbeitswerkzeuge heran, so daß die Kontaktflächen der Arbeitswerkzeuge überhaupt Druck auf die Anschlagflächen am Hohlrad ausüben können. Die Kontaktflächen an den Arbeitswerkzeugen werden durch die freien Enden der stabförmigen Arbeitswerkzeuge gebildet. Diejenigen Arbeitswerkzeuge, die das Hohlrad entgegen der Kräfte der Federn in die zweite Getriebestufe verschieben müssen, brauchen demnach nur in ihrer Stablänge von ihrer Einspannstelle her etwas länger ausgebildet zu sein, als diejenigen, mit denen keine Verschiebung des Hohlrades gewünscht wird.

Ein Ausführungsbeispiel der Erfindung ist in der Zeichnung dargestellt und wird im Folgenden näher erläutert. In der Zeichnung zeigt:

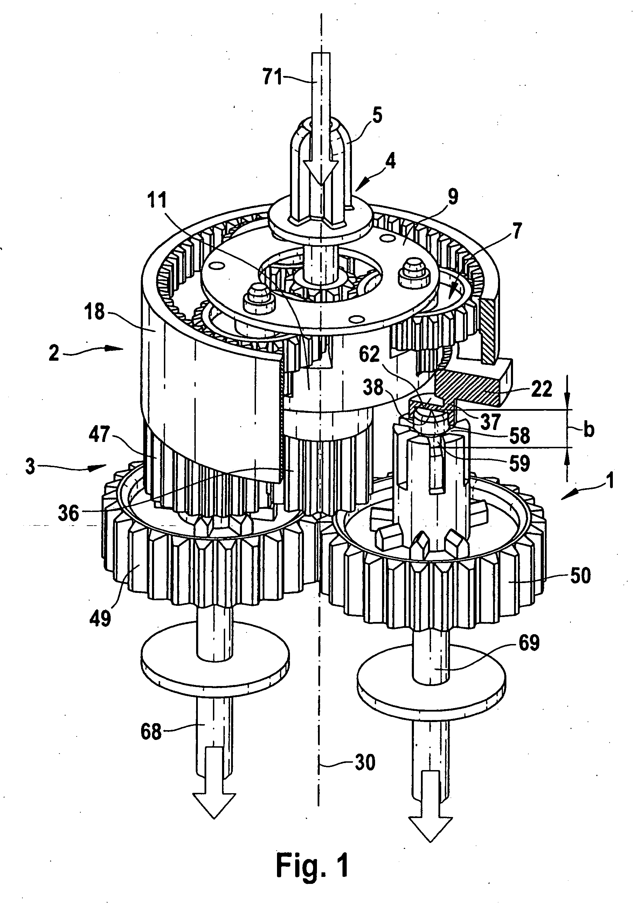

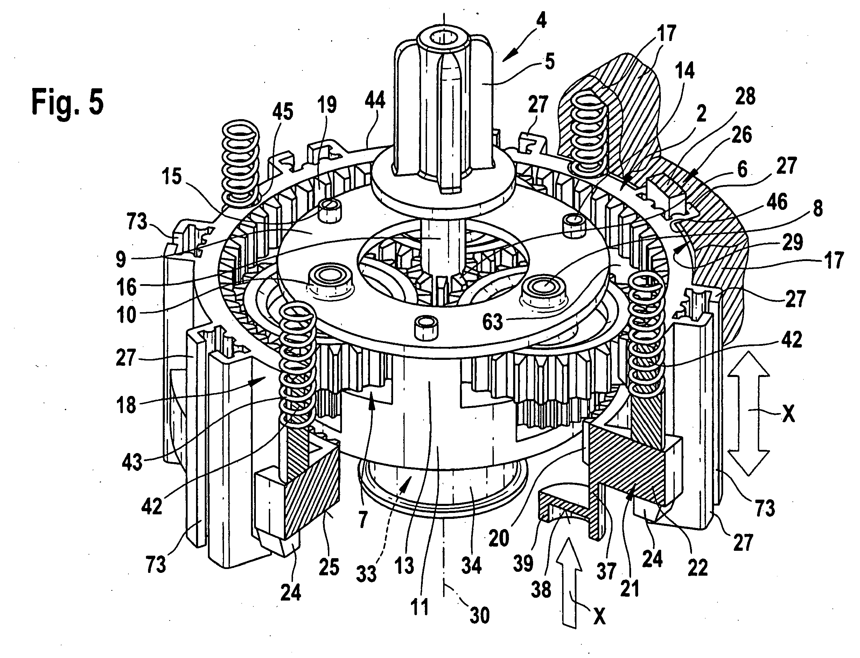

- Fig. 1: eine perspektivische Ansicht auf eine dreistufige Getriebeeinrichtung eines Küchengerätes nach der Erfindung, allerdings ohne das die Getriebeeinrichtung aufnehmende Gehäuse des Küchengerätes und ohne die in Fig. 5 dargestellte Rückstelleinrichtung des Hohlrades, wobei dieses zur besseren Ansicht der Planetenräder teilweise im rechten vorderen Abschnitt ausgeschnitten ist und wobei mit der dritten Getriebestufe ein zwei Arbeitswerkzeuge (nur teilweise dargestellt) aufnehmendes Zahnradpaar verbunden ist, wobei hier diejenigen Arbeitswerkzeuge eingesetzt wurden, die die Getriebeeinrichtung in ihrer Ausgangsstellung, nämlich der ersten Getriebestufe, belassen,
- Fig. 2: eine Seitenansicht senkrecht von vorne auf die Getriebeeinrichtung nach Fig. 1, allerdings mit zusätzlicher Darstellung des Kraftlinienverlaufes für die erste Getriebestufe,
- Fig. 3: eine der Fig. 1 entsprechende Darstellung, allerdings wurden hier andere Werkzeuge in das Zahnradpaar eingesetzt, so daß nun die zweite Getriebestufe eingeschaltet wurde,
- Fig. 4: eine Seitenansicht senkrecht von vorne auf die Getriebeeinrichtung nach Fig. 3, allerdings mit zusätzlicher Darstellung des Kraftlinienverlaufes für die zweite Getriebestufe,
- Fig. 5: eine perspektivische Teilschnittansicht auf das zweistufige Planetenradgetriebe in vergrößertem Maßstab, wobei hier zur besseren Einsicht in die Planetenräder das Hohlrad ebenfalls im vorderen Abschnitt teilweise ausgeschnitten ist und wobei hier zusätzlich eine das Hohlrad in seine Ausgangsstellung bringende Rückstelleinrichtung und ein nur andeutungsweise dargestelltes Gehäuse des Küchengerätes gezeigt ist und
- Fig. 6: eine Explosionsdarstellung der Getriebeeinrichtung gemäß Fig. 1, allerdings zusätzlich mit der Rückstelleinrichtung und nur einem einzigen auch nur teilweise dargestellten Arbeitswerkzeug.

Nach den Figuren 1 bis 4 und 6 besteht das Küchengerät aus einer in einem Gehäuse 17 (nur Figur 5) fest gelagerten Getriebeeinrichtung 1, die aus einem Planetenradgetriebe 2 und einem dem Planetenradgetriebe 2 nachgeschalteten einstufigen Getriebe 3 (nur Figuren 1 bis 4 und 6) zusammengesetzt ist. Das Planetenradgetriebe 2 weist eine zentral verlaufende Eingangswelle 4 auf, die an ihrem oberen freien Ende einen Zahneingriff 5 aufweist, der zum Ankuppeln an eine Antriebswelle eines oberhalb des Planetenradgetriebes 2 ausgebildeten elektrischen Antriebsmotors (nicht dargestellt) dient. Am anderen freien Ende ist die Eingangswelle 4 mit einem Zahnrad 6 versehen, das mit drei am Umfang gleichmäßig verteilten Planetenrädern 7 in Zahneingriff steht.

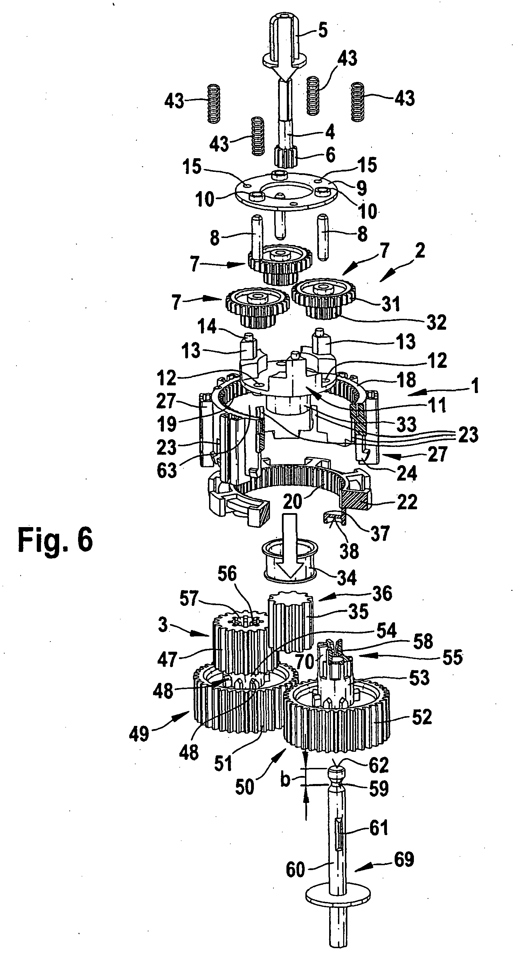

Die Planetenräder 7 sind nach Figur 6 mit Achsen 8 versehen, die im oberen Teil in an einem Metallring 9 ausgebildeten Lagerbuchsen 10 und im unteren Teil in an einem Planetenradgehäuse 11 ausgebildeten Lagerstellen 12 fixiert sind. Die Planetenräder 7 sind um die Achsen 8 frei drehbar. Das Planetenradgehäuse 11 ist im wesentlichen im unteren Abschnitt scheibenförmig ausgebildet, an dessen Boden die Lagerstellen 12 angeordnet sind. Am Umfang zwischen den einzelnen Lagerstellen 12 erstrecken sich nach oben drei am Umfang gleichmäßig verteilte Pfosten 13, die an ihren freien Enden mit an den Pfosten 13 einteilig angeformten Stiften 14 versehen sind. An dem Metallring 9 zwischen den Lagerbuchsen 10 sind Bohrungen 15 ausgebildet, die paßgenau von den Stiften 14 durchdrungen werden und an der Oberseite beispielsweise durch Warmverformung bzw. Pressen derart verbreitert werden, daß der Metallring 9 ortsfest auf dem Planetenradgehäuse 11 befestigt ist und so die Planetenräder 7 auf ihren Achsen 8 im Planetenradgehäuse 11 fixiert. Es besteht aber auch die Möglichkeit, daß die Stifte 14 in den Bohrungen 15 mit einem Preßsitz eingepreßt sind und so ebenfalls eine stabile Befestigung des Ringes 9 auf dem Planetenradgehäuse 11 entsteht. Das Planetenradgehäuse 11 ist vorzugsweise aus Kunststoff gespritzt.

Nach den Figuren 1 bis 6 ist natürlich die Eingangswelle 4 an ihrem Schaftabschnitt 16 über eine in den Zeichnungen nicht dargestellte Lagerstelle im Gehäuse 17 (nur in Fig. 5 teilweise angedeutet) gelagert und zentriert. Das Gehäuse 17 kann beispielsweise das Gehäuse eines Handmixers, Stabmixers oder einer sonstigen Küchenmaschine sein, bei der mindestens zwei unterschiedlich arbeitende Arbeitswerkzeuge für verschiedene Bearbeitungsvorgänge an Nahrungsmitteln adaptierbar sind.

Die Planetenräder 7 kämmen gemäß den Figuren 1 bis 6 mit einem Hohlrad 18, an dessen Innenwandung im oberen Bereich ein Zahnkranz 19 größeren Durchmessers angeformt ist, während im unteren Bereich ein aus einem Ring bestehender Zahnkranz 20 im Hohlrad 18 mit Befestigungsmitteln 21 befestigt ist. Die Befestigungsmittel 21 bestehen aus am Zahnkranz 20 radial nach außen hervorstehenden Wandelementen 22, die in am Zahnkranz 20 von unten her offene Schlitze 23 (Figur 6) drehfest eingreifen und über am Hohlrad 18 ausgebildete Federhaken 24, die von unten her an der Stirnfläche 25 der Wandelemente 22 angreifen, ortsfest am Hohlrad 18 befestigt sind.

In den Figuren 1 bis 4 wurde der Einfachheit halber nicht die am Außenumfang des Hohlrades ausgebildete Führungsanordnung 26 dargestellt, wie sie vorzugsweise aus Fig. 5 als Teilansicht hervorgeht. Die Führungsanordnung 26 besteht nach Figur 5 aus an der Außenfläche des Hohlrades 18 am Umfang gleichmäßig verteilten, rechteckförmigen Gleitschienen 27, in die über an den Gleitschienen 27 an der Außenseite ausgebildete Längsschlitze 73 an der Innenseite der Bohrung 29 am Gehäuse 17 hervorstehende, hammerkopfförmige Gleitleisten 28 eingreifen. Die Führungsanordnung 26 kann eine beliebige Form annehmen, sie arbeitet aber stets nach dem Nut-Feder- oder Schubladenprinzip, bzw. sie kann auch nach dem Prinzip einer Schwalbenschwanzführung ausgebildet sein, wie dies hier der Fall ist. Wichtig ist nur, daß nach Einsetzen der Getriebeeinrichtung 1das Hohlrad 18 ohne großen Kraftaufwand axial verschiebbar ist, um von der ersten in die zweite Getriebestufe zu gelangen. Das Planetenradgehäuse 11 ist in axialer Richtung einerseits über den Schaftabschnitt 16 und andererseits über eine Hülse 34 im Gehäuse 17 über Lagerstellen (nicht dargestellt) fixiert. Die Mittellinie 30 der Eingangswelle 4 ist auch gleichzeitig die Mittellinie des Planetenradgetriebes 2.

In den Figuren 1 bis 6 bestehen die einteiligen und vorzugsweise aus Kunststoff geformten Planetenräder 7 aus zwei hintereinander angeordneten Zahnkränzen 31, 32, wobei der obere Zahnkranz 31 einen größeren Durchmesser aufweist als der untere Zahnkranz 32. Während der obere Zahnkranz 31 mit dem am Hohlrad 18 ausgebildeten oberen Zahnkranz 19 kämmt, so kämmt in der zweiten Getriebestufe der untere Zahnkranz 32 mit dem am Hohlrad 18 ausgebildeten unteren Zahnkranz 20.

Nach den Figuren 1 bis 6 erstreckt sich von der Unterseite des Planetenradgehäuses 11 nach unten ein zentraler Rohrstutzen 33, in dem über eine Hülse 34 ein Zahnrad 35 drehfest befestigt ist. Das Zahnrad 35 ist somit kraftschlüssig mit dem Planetenradgehäuse 11 verbunden und bildet die Ausgangswelle 36 des Planetenradgetriebes 2. In Fig. 5 ist das Zahnrad 35 nicht mehr dargestellt und ebenso das darauf folgende einstufige Getriebe 3, wie es in den Figuren 1 bis 4 und 6 dargestellt ist. Das Zahnrad 35 kann beispielsweise über eine Verzahnung mit der Hülse 34 befestigt sein, es kann aber auch eingepreßt, verklebt oder sonst wie drehfest mit der Hülse 34 verbunden sein. Die Hülse 34 ist beispielsweise auf den Rohrstutzen 33 aufgepreßt und verklebt oder ultraschallverschweißt oder sonst wie mit diesem drehfest verbunden. Über die Außenfläche der Hülse 34 ist das Planetenradgehäuse 11 Im Gehäuse 17 des Küchengerätes drehbar gelagert und axial fixiert.

In den Figuren 5 und 6 erstrecken sich von der Stirnfläche 25 unterhalb des Zahnkranzes 20 nach unten zwei radial gegenüberliegende Arme 37, an denen nach unten weisende Anschlagflächen 38 ausgebildet sind. Die Anschlagflächen 38 werden von einer ringförmigen Wand 39 umgeben, die zur Führung der freien Enden der Arbeitswerkzeuge 40, 41; 68, 69 dienen, wie sie nur teilweise in den Figuren 1 bis 4 und 6 angedeutet sind.

Im oberen Abschnitt sind Nach Figur 5 am Hohlrad 18 nach oben hervorstehende Zentrierstifte 42 ausgebildet, an denen Spiralfedern 43 zentriert sind. Im eingebauten Zustand der Getriebeeinrichtung 1 im Gehäuse 17 werden die Spiralfedern 43 derart mit am Gehäuse 17 ausgebildeten Anschlägen (nicht dargestellt) beaufschlagt, daß die Spiralfedern 43 mit Vorspannung das Hohlrad 18 in die in den Figuren 1, 2 und 5 dargestellte erste Getriebestufestellung bringen. Die vier Spiralfedern 40 sind gleichmäßig am Umfang am Hohlrad 18 ausgebildet und werden zusätzlich durch am Außenumfang 44 des Hohlrades 18 ausgebildete, längs der Mittelachse 30 verlaufende, halbkreisförmige Wandelemente 45 radial von innen her und von außen her von der Innenseite 46 des Gehäuses 17 geführt.

Nach den Figuren 1 bis 4 und 6 steht das als Ausgangswelle 36 gebildete Zahnrad 35 in Zahneingriff mit einem Zahnrad 47, das über eine Stirnverzahnung 48 drehfest mit einem Kupplungsteil 49 verbunden ist, was seinerseits mit einem Kupplungsteil 50 in Zahneingriff steht. Die beiden Kupplungsteile 49, 50 weisen an ihrem Außenumfang Verzahnungen 51, 52 und bilden somit auch Zahnräder, die miteinander in Zahneingriff stehen. Von den Kupplungsteilen 49, 50 erstreckt sich nach oben je ein Dom 53, 54, an deren oberen freien Ende Kupplungselemente 55, 56 ausgebildet sind. Der Dom 54 des linken Kupplungsteiles 49 ragt in eine am Zahnrad 47 ausgebildete zentrale Bohrung 57 soweit hinein, daß das Kupplungselement 56 gerade noch von oben nach Figur 6 an der Bohrung 57 zu erkennen ist.

Die Kupplungselemente 55, 56 werden von einzelnen am Umfang verteilten, federnden Zungen 70 mit an ihren Enden nach innen weisenden Rasthaken 58 gebildet, die beim Aufstecken eines Arbeitswerkzeuges 40 in die am freien Ende des Arbeitswerkzeuges 40 ausgebildete Ringnut 59 federnd eingreifen. Gleichzeitig greifen die am oberen Schaft 60 diametral gegenüberliegenden Mitnehmer 61 in eine an der Innenwand (nicht dargestellt) der Bohrung (nicht dargestellt) der Kupplungsteile 49, 50 ausgebildete Verzahnung (nicht dargestellt). Auf diese Weise sind einerseits die Arbeitswerkzeug drehfest mit den Kupplungsteilen 49, 50 verbunden und andererseits sind sie über die Rasthaken 58 gegen Herausfallen an den Kupplungsteilen 49, 50 gesichert. An dieser Stelle verweisen wir nochmals auf die von der Annmelderin bereits seit vielen Jahren vertriebenen Handrührer der Serie M 800, wo bereits ein einstufiges Planetenrad mit anschließendem einstufigem Getriebe, wie es hier dargestellt ist, eingesetzt wird.

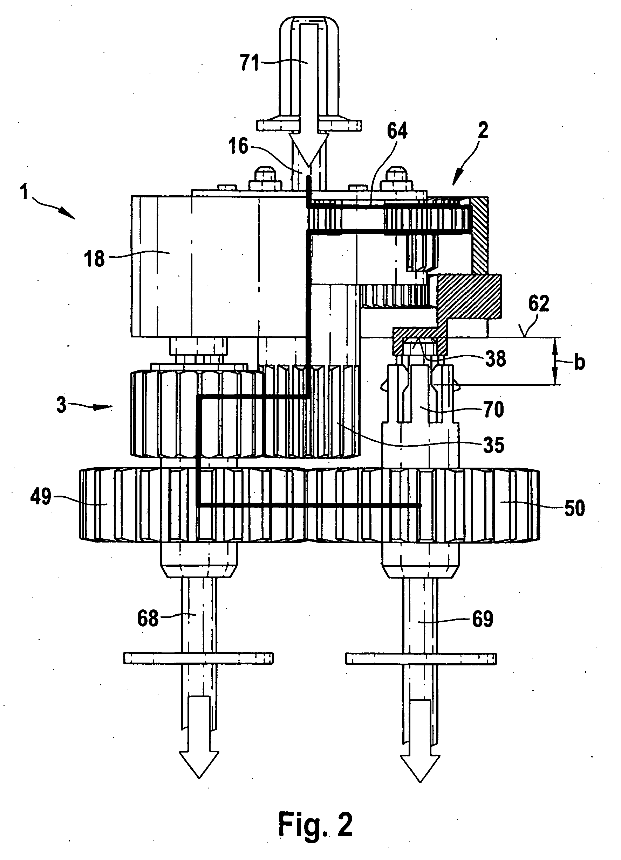

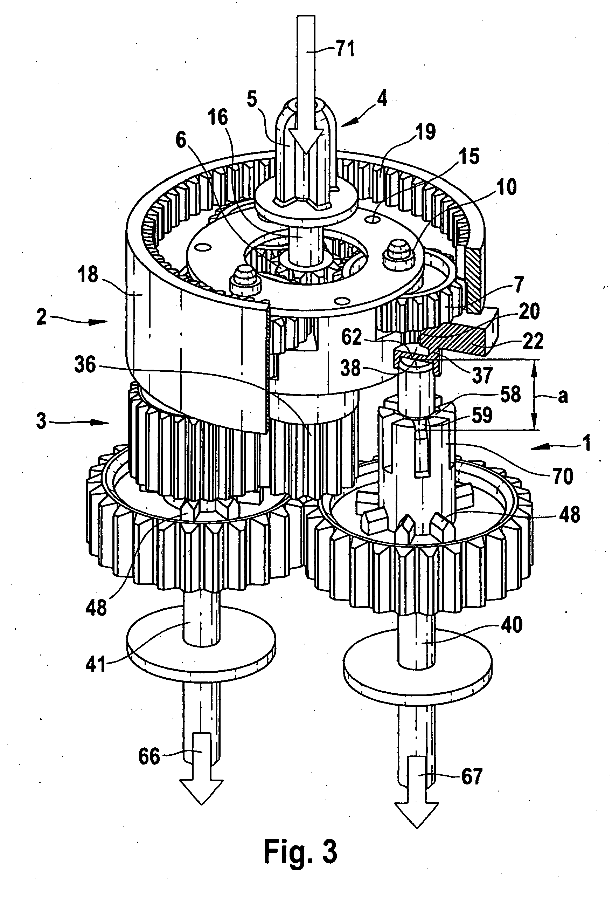

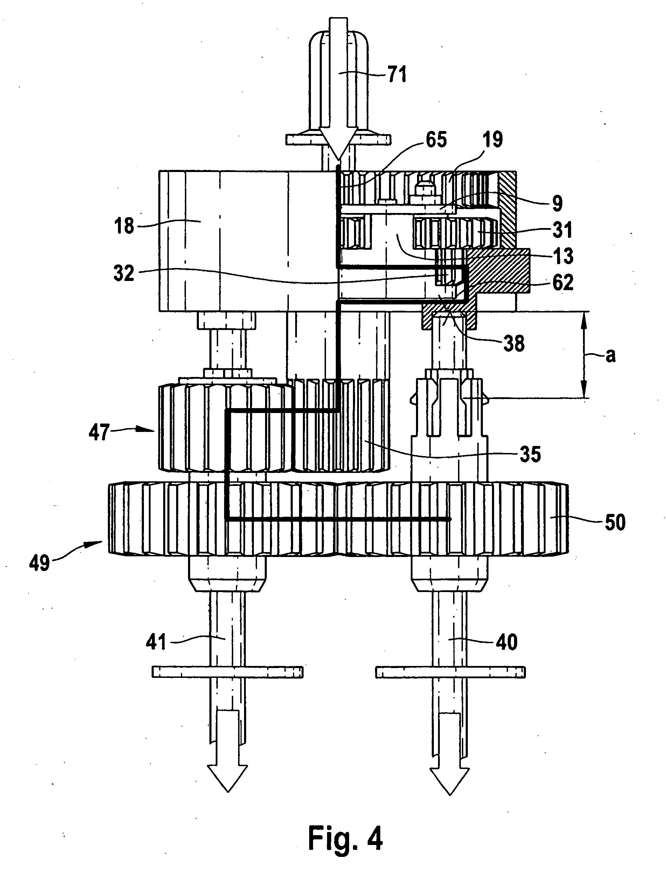

Nach den Figuren 1 bis 4 und 6 bildet das freie Ende der Arbeitswerkzeuge 40, 41; 68, 69 eine Kontaktfläche 62, die bei denjenigen Arbeitswerkzeugen 40, 41, die einen größeren Abstand a (Figuren 3 und 4) von der Ringnut 59 zur Kontaktfläche 62 haben, einen Druck auf die Anschlagfläche 38 ausüben, so daß das Hohlrad 18 nach oben verschoben wird und die Zahnkränze 32 der Planetenräder 7 in Zahneingriff mit dem unteren Zahnkranz 20 gelangt, während die Zahnkränze 31 der Planetenräder 7 außer Zahneingriff mit dem oberen Zahnkranz 19 geraten. Bei denjenigen Arbeitswerkzeugen 68, 69, bei denen die erste Getriebestufe beibehalten werden soll, sind die Abstände b (Figuren 1 und 2) von der Ringnut 59 zu den Kontaktflächen 62 so klein bemessen, daß keine Verschiebung des Hohlrades 18 erfolgt, also das Hohlrad 18 die in den Figuren 1, 2 und 5 eingenommene erste Getriebestufestellung beibehält. Das Maß a ist also gerade so groß, um das Planetenradgetriebe 2 vom ersten in den zweiten Gang zu schalten, wobei dieser Weg erst nach dem Einrasten der Rasthaken 58 in die jeweilige Ringnut 59 vollzogen ist.

In die Kupplungselemente 55, 56 können vorzugsweise nur Arbeitswerkzeuge 40, 41; 68, 69 mit gleichen Abständen a oder b eingesetzt werden, d.h., es können entweder nur zwei Knethaken oder zwei Schneebesen zu gleicher Zeit benutzt werden. Hierdurch wird verhindert, daß nicht mit der hohen Drehzahl ein für eine niedrigere Drehzahl geschaffener Knethaken und ein für eine hohe Drehzahl geeigneter Schneebesen zu gleicher Zeit eingesetzt werden, was zur Zerstörung der Maschine und auch zu Verletzungen führen könnte.

Durch die Erfindung ist es also erstmals möglich, mit Hilfe vorgegebener Abstände a, b beim Einsetzen der Arbeitswerkzeuge 40, 41; 68,69 in die Kupplungselemente 55, 56 automatisch die Getriebestufe einzuschalten, die für diese Arbeitswerkzeuge 40, 41 vorteilhaft ist. Sind die Arbeitswerkzeuge 40, 41 mit dem Maß b eingesetzt, so erfolgt keine Verschiebung des Hohlrades 18 und es bleibt somit die erste Getriebestufe eingeschaltet. Dies deshalb, weil die Spiralfedern 43 das Hohlrad 18 gemäß Fig. 5 unter Vorspannung nach unten drücken und dadurch stets der Zahnkranz 31 mit dem oberen Zahnkranz 19 in Eingriff bleibt. Erst beim Einsetzen von Arbeitswerkzeugen 40, 41, die mit dem Maß a behaftet sind, wird das Hohlrad 18 nach Fig. 5 entgegen der Kraft der Spiralfedern 43 in Richtung X nach oben gedrückt und es gelangt der Zahnkranz 32 in Eingriff mit dem Zahnkranz 20, während der Zahnkranz 31 in den zwischen den beiden Zahnkränzen 19, 20 gebildeten Freiraum 63 gelangt und somit außer Zahneingriff ist. Je nachdem, wie die einzelnen Zahnkränze 31, 32 bzw. 19, 20 in ihren Durchmessern ausgelegt sind, entsteht ein Über- oder Untersetzungsgetriebe.

In den Figuren 2 und 4 ist noch der Kraftlinienverlauf 64, 65 durch die einzelnen Zahnräder und Achsen im Prinzip dargestellt. Fig. 2 zeigt den Kraftlinienverlauf 64 für die erste Getriebestufe und Fig. 4 den Kraftlinienverlauf 65 für die zweite Getriebestufe. Der in den Figuren 1 bis 4 an der Eingangswelle 4 gezeigte Pfeil 71 zeigt wie die am Ausgang an den Arbeitswerkzeugen 40, 41 dargestellten Pfeile 66, 67 den Kraft- bzw. Drehmomentenein- bzw, - ausgang, d.h., das eingeleitete Drehmoment 68 teilt sich in die Drehmomente 66, 67 an den Arbeitswerkzeugen 40, 41 am Ausgang auf.

Die Zahnräder 47, 49, 50 sind selbstverständlich in im Gehäuse 17 ausgebildeten Lagerschalen gelagert, was aber in der Zeichnung nicht dargestellt ist.

Das Maß b, das sich von der Ringnut 59 bis zur Stirnfläche 62 ergibt, ist so groß gewählt, daß entweder zwischen der Kontaktfläche 62 der Anschlagfläche 38 ein geringes Lüftspiel oder die Kontaktfläche 62 gerade an der Anschlagfläche 38 anliegt, jedoch dadurch das Hohlrad 18 nicht gemäß den Figuren 1 bis 6 nach oben verschoben wird. Dabei werden die freien Enden der Arbeitswerkzeuge 68, 69 in den ringförmigen Wänden 39 zentriert geführt.

## Patentansprüche

1. Küchengerät zum Antreiben von verschiedene Nahrungsmittel bearbeitenden Arbeitswerkzeugen (40, 41; 68, 69), insbesondere für elektrisch betriebene Küchengeräte, wie Küchenmaschinen, Handrührer oder Stabmixer, mit einer antriebsseitigen Eingangswelle (4) und einer abtriebsseitigen Ausgangswelle (36), zwischen denen in einem Gehäuse (17) ein die Umdrehungen an der Ausgangswelle (36) verändernde Getriebeeinrichtung (1) ausgebildet ist, wobei an der Ausgangswelle (36) selbst oder an mindestens einem mit der Ausgangswelle (36) in Dreheingriff stehenden Kupplungsteil (49, 50) mindestens ein Arbeitswerkzeug (40, 41) über zusammenwirkende Kupplungselemente (55, 56, 61) orts- und drehfest aufsteckbar bzw. von diesen abnehmbar ist, **dadurch gekennzeichnet, daß** am Arbeitswerkzeug (40, 41) und an der Getriebeeinrichtung (1) Mittel (Abstand a, 62, 38, 27, 28, 15, 19, 20, 31, 32) ausgebildet sind, durch die beim Aufstecken eines Arbeitswerkzeuges (40, 41) die für das Arbeitswerkzeug (40, 41) richtige Getriebestufe gewählt wird.

2. Küchengerät nach Anspruch 1, **dadurch gekennzeichnet, daß** die Getriebeeinrichtung (1) aus einem Planetenradgetriebe (2) besteht und die Mittel einerseits aus mindestens einer an einem Hohlrad (18) ausgebildeten Anschlagfläche (38) und einer am Arbeitswerkzeug (40, 41; 68, 69) ausgebildeten Kontaktfläche (62) und andererseits aus unterschiedlichen Arbeitswerkzeugen (40, 41; 68, 69) bestehen, die von ihren ortsfesten Kupplungselementen (59) unterschiedlich weit-(Abstand a bzw. b) beabstandete Kontaktflächen (62) aufweisen.

3. Küchengerät nach Anspruch 2, **dadurch gekennzeichnet, daß** das Hohlrad (18) über eine Führungsanordnung (26) im Gehäuse (17) parallel zur Mittelachse (30) des Planetenradgetriebe (2) axial verschiebbar, jedoch drehfest gelagert ist.

4. Küchengerät nach Anspruch 3, **dadurch gekennzeichnet, daß** die Führungsanordnung (26) einerseits aus am Außenumfang des Hohlrades (18) verteilten Gleitschienen (27) und andererseits aus an der Innenwand (29) des Gehäuses (17) ausgebildeten Gleitleisten (28) besteht und daß die Gleitleisten (28) die Gleitschienen (27) umgreifen bzw. ineinander greifen.

5. Küchengerät nach Anspruch 4, **dadurch gekennzeichnet, daß** die Gleitschienen (27) und die Gleitleisten (28) parallel zur Mittelachse (30) des Planetenradgetriebes (2) verlaufen.

6. Küchengerät nach Anspruch 3, **dadurch gekennzeichnet, daß** das Hohlrad (18) durch eine zwischen dem Gehäuse (17) und dem Hohlrad (18) vorgespannte Federanordnung (43) beaufschlagt ist.

7. Küchengerät nach Anspruch 2, **dadurch gekennzeichnet, daß** am Hohlrad (18) mindestens ein Zahnkranz (20) als einzelnes Ringteil ausgebildet ist, das über Befestigungsmittel (23, 37; 24, 25) im Hohlrad (18) fest verankert ist.

8. Küchengerät nach Anspruch 7, **dadurch gekennzeichnet, daß** die Befestigungsmittel (23, 37; 24, 25) einerseits aus am Zahnkranz (20) radial hervorstehenden Wandelementen (22) gebildet werden, die in am Hohlrad (18) verlaufende Schlitze (23) eingreifen und andererseits aus am Hohlrad (18) ausgebildeten Federhaken (24) bestehen, die den Zahnkranz (20) nach seinem Einsetzen im Hohlrad (18) hintergreifen.

9. Küchengerät nach Anspruch 2, **dadurch gekennzeichnet, daß** die Ausgangswelle (36) mit einem ersten Zahnrad (47) in Zahneingriff steht, daß das erste Zahnrad (47) mit einem zweiten Zahnrad (49) fest verbunden ist, daß das zweite Zahnrad (49) in Zahneingriff mit einem dritten Zahnrad (50) steht und daß an dem zweiten und dritten Zahnrad (49, 50) je ein Kupplungselement (55) ausgebildet ist, an dem je ein Arbeitswerkzeug (40, 41; 68, 69) orts- und drehfest kuppelbar ist.

10. Küchengerät nach Anspruch 9, **dadurch gekennzeichnet, daß** am Hohlrad (18) diametral gegenüberliegend je ein Arm (37) ausgebildet ist und daß die Kontaktflächen (62) der Arbeitswerkzeuge (40, 41) mit den Anschlagflächen (38) fluchten.

## Claims

1. A kitchen device to drive various tools (40, 41; 68, 69) for processing food, particularly for electrically driven kitchen devices, such as blenders, food processors or automatic mixers, with a drive-side input shaft (4) and a driven-side output shaft (36), between which is arranged a gear set (1), in a housing (17), that varies the revolutions of the output shaft (36), at least one tool (40, 41) being able, by means of interacting coupling elements (55, 56, 61), to be inserted in, fixed as to position and fixed against rotation, and/or removed from the output shaft (36) itself or at least one coupling part (49, 50) that is rotationally engaged with the output shaft (36), **characterized in that** means (distance a, 62, 38, 27, 28, 15, 19, 20, 31, 32) are arranged on the tool (40, 41) and on the gear set (1) by which, upon insertion of a tool (40, 41), the right gear step for the tool (40, 41) is selected.

2. The kitchen device according to Claim 1, **characterized in that** the gear set (1) comprises a planetary drive (2) and the means comprise at least one stopping face (38), arranged on a ring gear (18), and a contact face (62), arranged on the tool (40, 41; 68, 69), as well as other tools (40, 41; 68, 69), which exhibit contact faces (62) varyingly spaced (distance a or b) from their locationally fixed coupling elements (59).

3. The kitchen device according to Claim 2, **characterized in that** the ring gear (18) is mounted by means of a guiding arrangement (26) in the housing (17) parallel to the center axle (30) of the planetary drive (2), such that it can be moved in the axial direction but is fixed against rotation.

4. The kitchen device according to Claim 3, **characterized in that** the guiding arrangement (26) comprises sliding rails (27), distributed on the outer perimeter of the ring gear (18), and sliding bars (28) on the inside wall (29) of the housing (17), and that the sliding bars (28) encompass and engage with the sliding rails (27).

5. The kitchen device according to Claim 4, **characterized in that** the sliding rails (27) and the sliding bars (28) run parallel to the center axle (30) of the planetary drive (2).

6. The kitchen device according to Claim 3, **characterized in that** the ring gear (18) is acted upon by a pretensioned spring arrangement (43) between the housing (17) and the ring gear (18).

7. The kitchen device according to Claim 2, **characterized in that** there is on the ring gear (18) at least one toothed ring (20), fashioned as a single ring part, which is firmly anchored in the ring gear (18) by means of fastening elements (23, 37; 24, 25).

8. The kitchen device according to Claim 7, **characterized in that** the fastening elements (23, 37; 24, 25) are fashioned from wall elements (22) protruding radially from the toothed ring (20), which engage with slots (23) running on the ring gear (18) and comprise spring hooks (24) arranged on the ring gear (18), which engage behind the toothed ring (20) after its insertion in the ring gear (18).

9. The kitchen device according to Claim 2, **characterized in that** the output shaft (36) meshes with a first toothed gear (47), that the first toothed gear (47) is permanently connected with a second toothed gear (49), that the second toothed gear (49) meshes with a third toothed gear (50) and that a coupling element (55) is arranged on each of the second and third toothed gears (49, 50), with each of which a tool (40, 41; 68, 69) can be coupled, fixed as to location and fixed against rotation.

10. The kitchen device according to Claim 9, **characterized in that** two arms (37) are arranged diametrically opposite one another on the ring gear (18) and that the contact faces (62) of the tools (40, 41) are aligned flush with the stopping faces (38).

## Revendications

1. Dispositif de cuisine pour entraîner divers outils (40, 41 ; 68, 69) destiné au traitement d'aliments, en particulier pour des dispositifs de cuisine entraînés électriquement, tels que des batteurs-mélangeurs, des traiteurs d'alimentation ou des mixeurs automatiques, avec un arbre d'entrée (4) côté entraînement et un arbre de sortie (36) côté entraîné, entre lesquels est arrangé un ensemble d'engrenages (1), dans un logement (17), qui fait varier les révolutions de l'arbre de sortie (36), au moins un outil (40, 41) étant capable, au moyen d'éléments de couplage (55, 56, 61) qui interagissent, d'être inséré dans, fixé quant à la position et fixé vis-à-vis de la rotation, et/ou retiré de l'arbre de sortie (36) lui-même ou au moins une partie de couplage (49, 50) qui est en prise par rotation avec l'arbre de sortie (36), **caractérisé en ce que** des moyens (distance a, 62, 38, 27, 28, 15, 19, 20, 31, 32) sont arrangés sur l'outil (40, 41) et sur l'ensemble d'engrenages (1) par lesquels, lors de l'insertion d'un outil (40, 41), l'étage de l'engrenage de l'outil approprié (40, 41) est sélectionné.

2. Dispositif de cuisine selon la revendication 1, **caractérisé en ce que** l'ensemble d'engrenages (1) comprend un entraînement planétaire (2) et les moyens comprennent au moins une face d'arrêt (38), arrangée sur une couronne dentée (18), et une face de contact (62), arrangée sur l'outil (40, 41 ; 68, 69), ainsi que d'autres outils (40, 41 ; 68, 69), qui présentent des faces de contact (62) espacées de façon variable (distance a ou b) à partir de leurs éléments de couplage (59) fixés quant à la position.

3. Dispositif de cuisine selon la revendication 2, **caractérisé en ce que** la couronne dentée (18) est montée au moyen d'un ordonnancement de guidage (26) dans le logement (17) parallèle à l'axe central (30) de l'entraînement planétaire (2), de telle sorte qu'elle peut être déplacée dans la direction axiale, mais est fixée vis-à-vis de la rotation.

4. Dispositif de cuisine selon la revendication 3, **caractérisé en ce que** l'ordonnancement de guidage (26) comprend des rails coulissants (27), répartis sur le périmètre externe de la couronne dentée (18), et des barres coulissantes (28) sur la paroi intérieure (29) du logement (17), et **en ce que** les barres coulissantes (28) englobent et viennent en prise avec les rails coulissants (27).

5. Dispositif de cuisine selon la revendication 4, **caractérisé en ce que** les rails coulissants (27) et les barres coulissantes (28) passent parallèles à l'axe central (30) de l'entraînement planétaire (2).

6. Dispositif de cuisine selon la revendication 3, **caractérisé en ce que** la couronne dentée (18) est actionnée par un ordonnancement de ressort précontraint (43) entre le logement (17) et la couronne dentée (18).

7. Dispositif de cuisine selon la revendication 2, **caractérisé en ce qu'**il y a sur la couronne dentée (18) au moins une bague dentée (20), façonnée en tant que pièce de bague unique, qui est fermement ancrée dans la couronne dentée (18) au moyen d'éléments de fixation (23, 37 ; 24, 25).

8. Dispositif de cuisine selon la revendication 7, **caractérisé en ce que** les éléments de fixation (23, 37 ; 24, 25) sont façonnés à partir d'éléments de paroi (22) faisant saillie en sens radial à partir de la bague dentée (20), lesquels viennent en prise avec des encoches (23) passant sur la couronne dentée (18) et comprennent des crochets à ressort (24) arrangés sur la couronne dentée (18), lesquels viennent en prise derrière la bague dentée (20) après son insertion dans la couronne dentée (18).

9. Dispositif de cuisine selon la revendication 2, **caractérisé en ce que** l'arbre de sortie (36) s'engrène avec un premier engrenage denté (47), **en ce que** le premier engrenage denté (47) est relié de manière permanente à un deuxième engrenage denté (49), **en ce que** le deuxième engrenage denté (49) s'engrène avec un troisième engrenage denté (50) et **en ce qu'**un élément de couplage (55) est arrangé sur chacun des deuxième et troisièmes engrenages dentés (49, 50), avec chacun desquels un outil (40, 41 ; 68, 69) peut être couplé, fixé quant à sa position et fixé vis-à-vis de la rotation.

10. Dispositif de cuisine selon la revendication 9, **caractérisé en ce que** deux bras (37) sont arrangés diamétralement de manière opposée l'un par rapport à l'autre sur la couronne dentée (18) et **en ce que** les faces de contact (62) des outils (40, 41) sont alignées affleurantes avec les faces d'arrêt (38).
